# EUROPÄISCHE PATENTANMELDUNG

(11) **EP 3 734 093 A1**
(43) Veröffentlichungstag der Anmeldung: **04.11.2020**
(21) Anmeldenummer: 20155623.0
(22) Anmeldetag: 05.02.2020
(51) Int. Cl.: F16C 17/02, F16C 17/04, F16C 17/10, F16C 19/04, F16C 19/10, F16C 19/14, F16C 23/04, F16C 23/08, F16C 33/10, F16C 33/78, F16C 31/02, F16C 33/74, F16C 11/04, F16C 27/02, F16C 27/06

(54) **DISTANZSCHEIBE ALS DICHTUNG**

(30) Priorität: 30.04.2019 DE 102019111136
(71) Anmelder: Federal-Mogul Deva GmbH, 35260 Stadtallendorf (DE)
(72) Erfinder: Gröver, Christian, 91315 Höhstadt a.d. Aisch (DE); Maus, Jan-Ulrich, 35274 Kirchhain (DE)
(74) Vertreter: Kurig, Thomas

(57) **Zusammenfassung**

Bereitgestellt wird eine Distanzscheibe zur Abdichtung eines ringförmigen Spalts. Die Distanzscheibe umfasst eine ringförmige Gleitschicht und eine ringförmige elastische Schicht, die in Axialrichtung mit der Gleitschicht verbunden ist.

## Beschreibung

### Gebiet der Erfindung

Die vorliegende Erfindung betrifft Dichtungen zur Abdichtung von ringförmigen Spalten zwischen relativ zueinander bewegten Bauteilen. Insbesondere betrifft die vorliegende Erfindung eine Distanzscheibe als Dichtung für selbstschmierende Gleitlager.

### Stand der Technik

Bei Lagerungen, z.B. im Land- und Baumaschinen Bereich (Bagger, etc.), wird in den meisten Fällen mit einfachen O-Ringdichtungen oder Gummidichtungen gearbeitet, um zu verhindern, dass abrasive Partikel (z.B. Sand oder Schmutz) in den Lagerspalt geraten. Zusätzlich werden die Lager (z.B. Stahl- oder Bronzelager mit Schmiernuten) von innen heraus gefettet, was unter anderem dazu führt, dass Schmutzpartikel aus dem Lager heraus transportiert werden.

Diese Reinigung von innen heraus kann bei Einsatz von selbstschmierenden Gleitlagern nicht angewandt werden. Daher sollte bei solchen Lagern verhindert werden, dass Partikel, welche die Lebensdauer des Lagers herabsetzen würden, über den Lagerspalt in das Lager gelangen können. Es besteht also das Problem, selbstschmierende Gleitlager dauerhaft gegen das Eindringen abrasiver Partikel abzudichten.

### Zusammenfassung der Erfindung

Das Problem wird erfindungsgemäß gelöst durch eine Distanzscheibe (bzw. einen Distanzring) zur Abdichtung eines ringförmigen Spalts gemäß Anspruch 1. Abhängige Ansprüche betreffen bevorzugte Ausführungsformen.

Die Distanzscheibe umfasst eine ringförmige Gleitschicht und eine ringförmige elastische Schicht, die in Axialrichtung mit der Gleitschicht verbunden ist.

Gemäß einem Aspekt kann die elastische Schicht Polyurethan-Schaum umfassen.

Gemäß einem weiteren Aspekt kann die elastische Schicht in Axialrichtung mindestens um eine Strecke zusammendrückbar sein, die einer axialen Dicke der Gleitschicht gleicht.

Gemäß einem weiteren Aspekt können die Gleitschicht und die elastische Schicht miteinander verklebt sein.

Gemäß einem weiteren Aspekt können die Gleitschicht und die elastische Schicht mittels einer Tragschicht miteinander verbunden sein, die zwischen Gleitschicht und elastischer Schicht angeordnet ist.

Gemäß einem weiteren Aspekt kann die elastische Schicht auf der von der Gleitschicht abgewandten Seite mit einer Klebeschicht versehen sein.

Gemäß einem weiteren Aspekt kann eine Umfangsfläche der Gleitschicht und/oder der elastischen Schicht mit einer Schutzbeschichtung oder Schutzlackierung versehen sein.

Gemäß einem weiteren Aspekt kann die Gleitschicht an ihrer Gleitfläche mit einer ringförmigen Rille versehen sein.

Gemäß einem weiteren Aspekt kann die Gleitschicht eingebettete Festschmierstoffe umfassen.

Gemäß einem weiteren Aspekt können die Gleitschicht und/oder die elastische Schicht eine gleichbleibende axiale Dicke aufweisen.

Gemäß einem weiteren Aspekt kann die elastische Schicht einen Elastizitätsmodul im Bereich von 10 MPa bis 100 MPa aufweisen.

Gemäß einem weiteren Aspekt kann die Gleitschicht aus deva.tex® 532, deva.tex® 541, deva.tex® 542 oder deva.tex® 552 bestehen.

Gemäß einem weiteren Aspekt kann die Gleitschicht eine Folie, insbesondere eine PTFE-Folie, sein.

Es sei angemerkt, dass der Ausdruck 'Distanzscheibe' hier in dem Sinne zu verstehen ist, dass eine Distanz zwischen sich relativ zueinander drehenden Teilen überbrückt und geschlossen wird. Es handelt sich bevorzugt nicht um eine Distanzscheibe, die geeignet wäre einen höheren axialen Druck aufzunehmen und zwei Bauteile auf Abstand zu halten.

### Kurze Beschreibung der Zeichnung

Im Folgenden werden beispielhafte Ausführungsformen der Erfindung unter Bezug auf die
Figuren genauer beschrieben, wobei
Fig. 1 eine perspektivische Ansicht einer erfindungsgemäßen Distanzscheibe zeigt;
Fig. 2 eine Schnittdarstellung einer erfindungsgemäßen Distanzscheibe zeigt;
Fig. 3 eine Schnittdarstellung einer erfindungsgemäßen Distanzscheibe zeigt;
Fig. 4 eine erfindungsgemäße Distanzscheibe im eingebauten Zustand in einer Schnittdarstellung zeigt;

In der Beschreibung und in der Zeichnung werden gleiche Bezugszeichen für gleiche oder ähnliche Elemente oder Komponenten verwendet. Es ist zudem eine Bezugszeichenliste angegeben, die für alle Figuren gültig ist. Die in den Figuren dargestellten Ausführungen sind lediglich schematisch und stellen nicht notwendigerweise die tatsächlichen Größenverhältnisse dar.

### Ausführliche Beschreibung der Erfindung

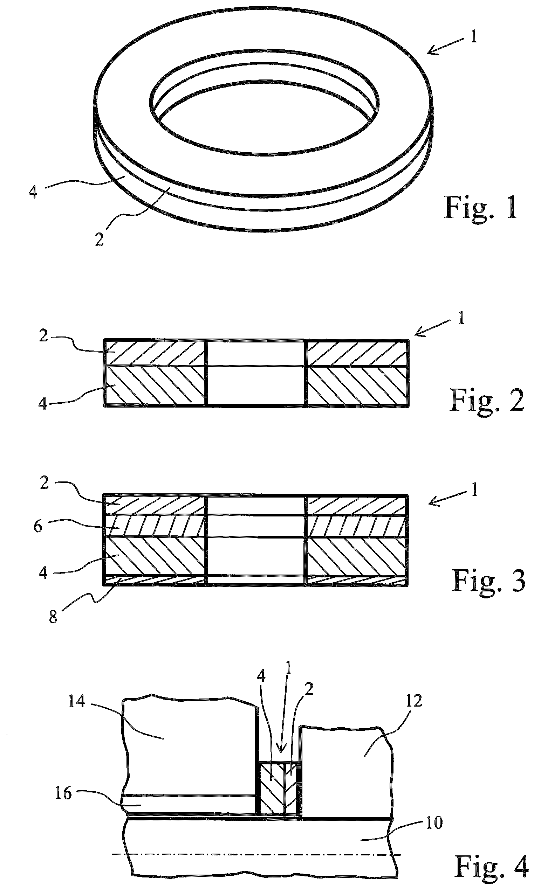

Fig. 1 und Fig. 2 stellen Ausführungsformen (die sich lediglich in den relativen Abmessungen unterscheiden) der erfindungsgemäßen Distanzscheibe (bzw. des Distanzrings) 1 dar, wobei Fig. 1 eine perspektivische Ansicht zeigt und Fig. 2 eine Schnittdarstellung zeigt, genauer einen axialen Schnitt. Die Distanzscheibe 1 umfasst eine elastische Schicht 4 und eine Gleitschicht 2, die beide ringförmig sind. Die Gleitschicht 2 und die elastische Schicht 4 sind in Axialrichtung miteinander verbunden, d.h. sie sind so verbunden, dass sie sich in Axialrichtung zumindest teilweise überlappen, bevorzugt vollständig überlappen. 'Axialrichtung' bezieht sich auf die durch die Ringform definierte Achse. Bevorzugt sind die elastische Schicht 4 und die Gleitschicht 2 kreisringförmig, wobei weiter bevorzugt sowohl die Innendurchmesser der beiden Kreisringe als auch die Außendurchmesser der beiden Kreisringe gleich sind. Die Distanzscheibe 1 kann einen ringförmigen Spalt zwischen zwei Bauteilen, die sich relativ zueinander drehen, abdichten. Die Distanzscheibe wird hierzu an einem der Bauteile mit der elastischen Schicht befestigt und vorgespannt, d.h. zusammengedrückt, eingebaut, so dass die Gleitschicht gegen das andere der Bauteile, auf dem die Gleitschicht gleiten kann, gedrückt wird und den Spalt abdichtet (siehe Fig. 4, in der beispielsweise der Lagerspalt eines Radiallagers abgedichtet wird; der Einsatz der erfindungsgemäßen Distanzscheibe ist jedoch ebenso bei einem Axiallager oder einem Gelenklager denkbar).

Die Gleitschicht 2 stellt sicher, dass die relative Drehung der Bauteile zueinander möglichst wenig durch Reibung zwischen Distanzscheibe 1 und dem Bauteil an dem diese gleitend anliegt (d.h. an dem die Gleitschicht 2 anliegt) beeinträchtigt wird. Für die Gleitschicht können im Prinzip dem Fachmann bekannte Materialien verwendet werden, wobei vorzugsweise ein Verbundmaterial zum Einsatz kommt. Bevorzugt umfasst die Gleitschicht eingebettete Schmierstoffe, insbesondere eingebettete Festschmierstoffe (z.B. Graphit oder PTFE). Beispielsweise kann die Gleitschicht aus einem Epoxydharz, das eventuell faserverstärkt ist, mit eingebetteten Festschmierstoffen bestehen. Besonders bevorzugt besteht die Gleitschicht aus deva.tex® 532, deva.tex® 541, deva.tex® 542 oder deva.tex® 552 der Firma Federal Mogul.

Da die Gleitschicht 2 durch die geringe Reibung relativ wenig abgenutzt wird, kann diese auch sehr dünn ausgeführt werden. Die Gleitschicht 2 kann daher als Folie, insbesondere als PTFE-Folie (Polytetrafluorethylen-Folie), ausgeführt sein, die mit der elastischen Schicht 4 verbunden ist.

Bevorzugt ist es weiterhin möglich (in den Figuren nicht dargestellt), eine Gleitfläche der Gleitschicht 2 mit einer ringförmigen Rille zu versehen, d.h. die Rille befindet sich auf der von der elastischen Schicht 4 abgewandten Seite der Gleitschicht 2. Diese kann Schmutz oder Staub aufnehmen, der möglicherweise zwischen die Gleitschicht und das Bauteil, an dem diese anliegt, eindringt.

Die elastische Schicht 4 umfasst ein elastisches Material, das bevorzugt einen Elastizitätsmodul E im Bereich von 10 - 100 MPa (10 - 100 N/mm²) aufweist. Bevorzugt umfasst die elastische Schicht 4 Polyurethan-Schaum (PU-Schaum), der weiter bevorzugt geschlossenporig ist, so dass das Eindringen von Schmutz oder Staub in das elastische Element verhindert wird. Es ist anzumerken, dass im Rahmen dieser Anmeldung 'elastisch' in einem allgemeinen Sine zu verstehen ist, d.h. als Fähigkeit eines Materials seine Form bei Krafteinwirkung (insbesondere durch Druck; das Material ist also kompressibel) zu ändern und nach Wegfall der Kraft die Formänderung wieder rückgängig zu machen und die ursprüngliche Form wieder einzunehmen, es sind also insbesondere 'linear elastisch' (d.h. das Hookesche Gesetz gilt) als auch ,hyperelastisch' eingeschlossen.

Gleitschicht 2 und elastische Schicht 4 sind bevorzugt durch einen Klebstoff miteinander verbunden, d.h. miteinander verklebt. Alternativ können Gleitschicht 2 und elastische Schicht 4 mittels einer Tragschicht miteinander verbunden sein (siehe Fig. 3). Die Seite bzw. Seitenfläche der elastischen Schicht 4, die von der Gleitschicht 2 abgewandt ist, ist bevorzugt planar bzw. eben.

Die Dicke der Gleitschicht 2 ist bevorzugt über die gesamte Gleitschicht 2 konstant bzw. gleichbleiben. Ebenso ist die Dicke der elastischen Schicht 4 bevorzugt über die gesamte elastische Schicht 4 konstant. Weiter bevorzugt sind beide Dicken über die gesamte jeweilige Schicht konstant. ,Dicke' ist als ,axiale Dicke', zu verstehen, d.h. die Abmessung der jeweiligen Schicht gemessen in Axialrichtung im nicht gespannten Zustand. Eine über die gesamte Schicht (Gleitschicht, elastische Schicht) konstante Dicke ist so zu verstehen, dass eine Messung der Dicke unabhängig von der Stelle an der Schicht, an der sie gemessen wird, immer zum gleichen Ergebnis führt.

Die Dicke der elastischen Schicht 4 ist bevorzugt so ausgelegt, dass die elastische Schicht 4 in Axialrichtung mindestens um eine Strecke zusammendrückbar ist, die der Dicke der Gleitschicht 2 gleicht. So wird sichergestellt, dass auch bei Abnutzung der Gleitschicht 2 von der elastischen Schicht 4 noch Kraft aufgebracht werden kann, die Gleitschicht 2 gegen ein entsprechendes Bauteil zu drücken. 'Zusammendrückbar' ist hier so zu verstehen, dass die elastische Schicht nach dem Zusammendrücken noch in der Lage ist, die ursprüngliche Dicke wieder einzunehmen, also elastisch, im Wesentlichen ohne plastische Verformung, zu reagieren (der Elastizitätsbereich wird also nicht verlassen).

Ein Verhältnis der Dicke der elastischen Schicht 4 zur Dicke der Gleitschicht 2 beträgt bevorzugt mindestens 2, weiter bevorzugt mindestens 5. So kann sich der Distanzring an eine sich in Umfangrichtung ändernde Spaltgeometrie anpassen.

Die Gleitschicht 2 und/oder die elastische Schicht 4 sind an einer Umfangfläche bevorzugt mit einer Schutzlackierung oder Schutzbeschichtung versehen, so kann verhindert werden, dass (im eingebauten Zustand) Schmutz oder Staub in die jeweilige Schicht eindringen kann.

Weiterhin ist es möglich, dass die Gleitschicht 2 und/oder die elastische Schicht 4 korrosionshemmende Inhaltsstoffe aufweisen; sie können beispielsweise damit imprägniert sein.

Fig. 3 stellt eine Schnittdarstellung einer weiteren Ausführungsform einer Distanzscheibe 1 dar. In dieser Ausführungsform sind zusätzlich zu den im Zusammenhang mit den Figuren 1 und 2 genannten Merkmalen eine Tragschicht 6 und eine Klebeschicht 8 dargestellt, die unabhängig voneinander optional vorgesehen werden können; d.h. es ist möglich, Tragschicht 6 und Klebeschicht 8 gleichzeitig vorzusehen oder entweder nur eine Tragschicht 6 oder nur eine Klebeschicht 8 vorzusehen.

Die Klebeschicht 8 ist an der elastischen Schicht 4 an der Seite angebracht, die von der Gleitschicht abgewandt ist. Sie ist also an der Seite angebracht, an der die elastische Schicht 4 an einem Bauteil befestigt werden soll, und ermöglicht somit die Befestigung der Distanzscheibe 1 an dem Bauteil. Die Klebeschicht 8 umfasst entsprechend einen Klebstoff.

Die Tragschicht 6 ist zwischen Gleitschicht 2 und elastischer Schicht 4 angeordnet und verbindet diese, z.B. können die Gleitschicht 2 und die elastische Schicht 4 jeweils mit der Tragschicht 6 verklebt sein. Die Tragschicht 6 besteht aus einem festeren Material als Gleitschicht 2 und elastische Schicht 4, etwa einem faserverstärktem Epoxydharz oder einem Metall, und dient dazu, die strukturelle Festigkeit der Distanzscheibe 1 zu erhöhen. Dies ist z.B. dann hilfreich, wenn die Gleitschicht 2 sehr dünn ausgeführt ist und die elastische Schicht 4 alleine die Ringform nicht aufrechterhalten kann.

Fig. 4 stellt in einer Schnittdarstellung eine Distanzscheibe 1 im eingebauten Zustand dar. Es ist nur ein Teil der gesamten Anordnung, die in wesentlichen Teilen rotationssymmetrisch um die eingezeichnete Symmetrieachse ist, dargestellt; auf eine Schraffur der Schnittflächen wurde außer bei der Gleitschicht 2 und der elastischen Schicht 4 verzichtet. In der gezeigten Anordnung ist eine Welle 10 in einem Radial-Lager drehbar gelagert. An der Welle 10 ist ein Anbauteil 12 befestigt, das sich also zusammen mit der Welle dreht. Das Lager umfasst ein Lagergehäuse 14 und eine in dem Gehäuse angebrachte Gleitlagerschicht 16, z.B. eine selbstschmierende Gleitschicht, die die eigentliche Lagerfläche für die Welle 10 bildet. In einem ringförmigen Spalt, der zwischen dem Lager und dem Anbauteil 12 gebildet ist, ist eine Distanzscheibe 1 angeordnet, die diesen Spalt gegen Eindringen von Staub oder Schmutz abdichtet. Hierbei ist die elastische Schicht 4 der Distanzscheibe 1 fest mit dem Lager, d.h. mit dem Lagergehäuse 14 und teilweise der Gleitlagerschicht 16, verbunden. Die Dicke der Distanzscheibe 1 ist so bemessen, dass die elastische Schicht 4 im eingebauten Zustand gespannt ist, d.h. zusammengedrückt ist. Die Gleitschicht 2 der Distanzscheibe 1 wird von der elastischen Schicht 4 gegen eine Seitenfläche des Anbauteils 12 gedrückt, so dass der Spalt abgedichtet wird. Bei Drehung der Welle 10 und damit des Anbauteils 12 gleitet die Gleitschicht 2 auf der Seitenfläche des Anbauteils. Die Abnutzung der Gleitschicht 2 ist hier aufgrund der relativ kleinen axialen Kräfte, die durch die elastische Schicht 4 erzeugt werden, gering. Bei Abnutzung der Gleitschicht 2 wird diese aufgrund der Elastizität der elastischen Schicht 4 weiterhin gegen die Seitenfläche des Anbauteils 12 gedrückt, so dass gewährleistet ist, dass der ringförmige Spalt dauerhaft abgedichtet bleibt. Statt an dem Lager kann die elastische Schicht der Distanzscheibe (anders als dargestellt) ebenso an dem Anbauteil zu befestigt werden. Ebenso ist der Einsatz bei einem Gelenklager denkbar, da eine Schwenkbewegung der Welle relativ zum Lager durch die Elastizität der elastischen Schicht ausgeglichen werden kann.

### Bezugszeichenliste

- 1: Distanzscheibe
- 2: Gleitschicht
- 4: elastische Schicht
- 6: Tragschicht
- 8: Klebeschicht
- 10: Welle
- 12: Anbauteil
- 14: Lagergehäuse
- 16: Gleitlagerschicht

## Patentansprüche

1. Distanzscheibe (1) zur Abdichtung eines ringförmigen Spalts, umfassend eine ringförmige Gleitschicht (2), und
eine ringförmige elastische Schicht (4), die in Axialrichtung mit der Gleitschicht (2) verbunden ist,
wobei die elastische Schicht (4) Polyurethan-Schaum umfasst.

2. Distanzscheibe (1) nach einem der vorstehenden Ansprüche, wobei die elastische Schicht (4) in Axialrichtung mindestens um eine Strecke zusammendrückbar ist, die einer axialen Dicke der Gleitschicht (2) gleicht.

3. Distanzscheibe (1) nach einem der vorstehenden Ansprüche, wobei die Gleitschicht (2) und die elastische Schicht (4) miteinander verklebt sind.

4. Distanzscheibe (1) nach einem der Ansprüche 1-2, wobei die Gleitschicht (2) und die elastische Schicht (4) mittels einer Tragschicht (6) miteinander verbunden sind, die zwischen Gleitschicht (2) und elastischer Schicht (4) angeordnet ist.

5. Distanzscheibe (1) nach einem der vorstehenden Ansprüche, wobei die elastische Schicht (4) auf der von der Gleitschicht (2) abgewandten Seite mit einer Klebeschicht (8) versehen ist.

6. Distanzscheibe (1) nach einem der vorstehenden Ansprüche, wobei eine Umfangsfläche der Gleitschicht (2) und/oder der elastischen Schicht (4) mit einer Schutzbeschichtung oder Schutzlackierung versehen ist.

7. Distanzscheibe (1) nach einem der vorstehenden Ansprüche, wobei die Gleitschicht (2) an ihrer Gleitfläche mit einer ringförmigen Rille versehen ist.

8. Distanzscheibe (1) nach einem der vorstehenden Ansprüche, wobei die Gleitschicht (2) eingebettete Festschmierstoffe umfasst.

9. Distanzscheibe (1) nach einem der vorstehenden Ansprüche, wobei die Gleitschicht (2) und/oder die elastische Schicht (4) eine gleichbleibende axiale Dicke aufweisen.

10. Distanzscheibe (1) nach einem der vorstehenden Ansprüche, wobei die elastische Schicht (4) einen Elastizitätsmodul im Bereich von 10 MPa bis 100 MPa aufweist.

11. Distanzscheibe (1) nach einem der vorstehenden Ansprüche, wobei die Gleitschicht (2) aus deva.tex® 532, deva.tex® 541, deva.tex® 542 oder deva.tex® 552 besteht.

12. Distanzscheibe (1) nach einem der Ansprüche 1-10, wobei die Gleitschicht (2) eine Folie, insbesondere eine PTFE-Folie, ist.

13. Vorrichtung, bei der in einem ringförmigen Spalt, zwischen einem Lagergehäuse (14) und einem durch ein Radial-Lager drehbar gelagerten Anbauteil (12), eine Distanzscheibe (1) angeordnet ist, die
eine ringförmige Gleitschicht (2), und
eine ringförmige elastische Schicht (4), die in Axialrichtung mit der Gleitschicht (2) verbunden ist umfasst,
wobei die elastische Schicht (4) im eingebauten Zustand gespannt ist, und so die Distanzscheibe (1) den Spalt gegen Eindringen von Staub oder Schmutz abdichtet.

14. Vorrichtung, nach Anspruch 13, wobei die Distanzscheibe (1) eine Distanzscheibe nach einem der Ansprüche 1 bis 12 ist.

15. Verwendung einer Distanzscheibe (1) zur Abdichtung eines ringförmigen Spalts, zwischen einem Lagergehäuse (14) und einem durch ein Radial-Lager drehbar gelagerten Anbauteil (12),
wobei in dem ringförmigen Spalt eine Distanzscheibe (1) angeordnet ist, die eine ringförmige Gleitschicht (2), und
eine ringförmige elastische Schicht (4), die in Axialrichtung mit der Gleitschicht (2) verbunden ist umfasst,
wobei die elastische Schicht (4) im eingebauten Zustand gespannt ist, und die Distanzscheibe (1) so diesen Spalt gegen Eindringen von Staub oder Schmutz abdichtet.

16. Verwendung einer Distanzscheibe nach Anspruch 15, wobei die Distanzscheibe (1) eine Distanzscheibe nach einem der Ansprüche 1 bis 12 ist.
